# EUROPEAN PATENT APPLICATION

(11) **EP 4 793 240 A1**
(43) Date of publication of application: **19.08.2026**
(21) Application number: 24884545.5
(22) Date of filing: 23.10.2024
(51) Int. Cl.: C02F 1/26, C02F 101/10, C08F 212/14, C08F 212/36

(54) **LITHIUM EXTRACTION RESIN STRUCTURE, PREPARATION, AND USE**

(30) Priority: 31.10.2023 CN 202311427366
(71) Applicant: Beijing Salt Lake Technology Development Company Limited, Beijing 100098 (CN)
(72) Inventor: LI, Dongdong, Beijing 100098 (CN); ZENG, Dewen, Beijing 100098 (CN); ZENG, Debin, Beijing 100098 (CN)
(74) Representative: Cabinet Becker et Associés
(86) International application number: PCT/CN2024/126820
(87) International publication number: WO 2025/092541

(57) **Abstract**

Disclosed are a lithium ion selective resin containing alkoxy grafted 2-hydroxybenzophenone (or aldehyde) functional groups, a preparation method therefor, and the use thereof. The lithium ion selective resin of the present disclosure has a high lithium-sodium separation factor and very strong chemical structural stability over a wide pH range.

## Description

The present invention claims the priority of the Chinese Patent Application No. 202311427366.2 filed on October 31, 2023, the disclosure of which is hereby incorporated by reference in its entirety as a part of this invention.

### TECHNICAL FIELD

The present invention relates to the field of lithium extraction materials, and specifically to a structure, preparation and use of a lithium extraction resin. More specifically, the present invention relates to a structure of a lithium-ion specific selective ion exchange resin grafted with phenolic ketone-based functional groups, a preparation method thereof, and a process scheme for extracting lithium from an aqueous solution using the resin.

### BACKGROUND

With the rapid development of electric vehicles, the demand for lithium-ion batteries is increasingly strong. Lithium, as an irreplaceable chemical element in the manufacture of lithium-ion batteries, is becoming a strategic resource in global competition. Efficient extraction of lithium from ores and brines is attracting extensive attention. Regardless of the type of lithium ores, their development inevitably involves the stage of extracting lithium from aqueous solutions containing alkali metals and alkaline earth metals. Therefore, developing separation materials with specific selectivity for lithium is a key direction for efficient lithium extraction.

Methods for extracting lithium salts from lithium-containing aqueous solutions mainly comprise precipitation, adsorption, ion exchange, electrodialysis membrane, nanofiltration membrane, solvent extraction methods, and the like. Among them, the adsorption and membrane methods are widely adopted due to their advantages such as high selectivity, simple process and equipment, continuous operation, and ease of automation. Currently used lithium adsorbents are mostly inorganic adsorbents, comprising aluminum-based lithium absorbents such as those based on aluminum hydroxide or lithium-aluminum double hydroxide, manganese-based lithium absorbents such as those based on manganese dioxide or lithium manganate, titanium-based lithium absorbents based on metatitanic acid or lithium titanate, or manganese-titanium-based lithium adsorbents. Moreover, electro-adsorption or rocking chair battery lithium extraction systems containing the inorganic lithium adsorption materials also show promising application prospects. However, those inorganic materials inevitably undergo processes such as hydration, swelling, and dissolution when used for extracting lithium from lithium-containing aqueous solutions, resulting in a dissolution loss or structural failure in the adsorbents, thereby reducing the energy efficiency and service life of the materials.

Ion exchange resins with organic polymer structures have superior mechanical properties, durability, and acid resistance in relation to inorganic adsorbents. However, to date, purely organic polymer resins with lithium ion specific selectivity have rarely been disclosed. Patent Publication CN108421539 discloses an organic resin for separating lithium and sodium, achieving selective separation of lithium utilizing single exchange groups such as sulfonate, phosphonate, and carboxylate groups, or aminodicarboxylic acid chelating groups. However, due to the small separation factor between sodium and lithium, the resin needs to cooperate with complex ion exchange process and equipment, and typically necessities sodium-washing with a lithium-containing solution, making the application process relatively complicated. Patent Publications CN113423499 and CN102786616 disclose crown ether-grafted organic polymer lithium extraction materials, achieving specific selectivity for lithium using a crown-4 structure, with a lithium-sodium separation factor close to 10. SuperLig Inc. introduced SuperLig 80 molecularly imprinted lithium extraction resins [Izatt et al., Metal separations of interest to the Chinese metallurgical industry, JOURNAL OF RARE EARTHS, Vol. 28, Spec. Issue, Dec. 2010, p. 22-29; and Izatt et al., Handbook of Green Chemistry: Online, 2018, pp. 219-220]. Ventura *et al.* reported a tetrameric hydroxyethyl methacrylate chelating lithium extraction resin prepared by ion imprinting [Ventura et al., Selective Recovery of Lithium from Brines, PROCEEDINGS, 43rd Workshop on Geothermal Reservoir Engineering], but the resin has a lithium-sodium separation factor of only 3.5 when the sodium-to-lithium ratio is close to 20.

Therefore, there remains a need to develop a reagent and method capable of efficiently separating lithium from alkali metals and alkaline earth metals.

### SUMMARY OF THE INVENTION

To solve the problem of efficiently separating lithium from alkali metals and alkaline earth metals, the inventors have discovered, through long-term experimental research, that 2-hydroxyphenyl ketone-based (or aldehyde-based) functional group has an extremely strong chelating ability towards lithium, enabling effective separation of lithium from alkali metals such as sodium, potassium, rubidium, and cesium, as well as alkaline earth metals such as magnesium, calcium, and strontium, and developed an ion exchange resin material bearing alkoxy-grafted 2-hydroxyphenyl ketone-based (or aldehyde-based) functional groups. The resin of the present invention exhibits high chemical structural stability over a wide pH range and a high lithium-sodium separation factor.

In a first aspect, the present invention provides a lithium-ion selective resin material, comprising at least a 2-hydroxyphenyl ketone-based (or aldehyde-based) functional group having a structure of Formula (I): 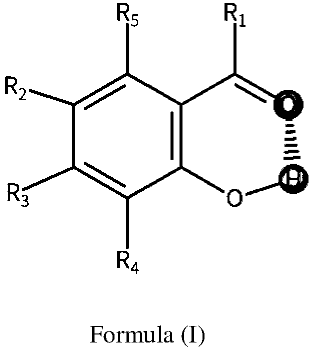
wherein R₁ is hydrogen, optionally substituted C₁-C₄ alkyl or optionally substituted phenyl, wherein the substitution is carried out by a group selected from the group consisting of: C₁-C₄ alkyl, C₁-C₄ alkoxy, halogen, and phenyl;
R₂, R₃, R₄ and R₅ are each independently hydrogen, halogen, nitro, benzyloxy, C₁₋₄ alkyl, C₁₋₄ alkoxy, or a linking group, with the proviso that at least one of R₂, R₃, R₄ and R₅ is a linking group that connects the structure of Formula (I) to the polymer backbone via a covalent bond.

In a second aspect, the present invention provides a method of extracting lithium, comprising:
contacting the lithium-ion selective resin of the first aspect with a lithium-containing solution, and then separating the lithium-ion selective resin.

In a third aspect, the present invention provides a method of preparing a lithium-ion selective resin via grafting reaction, comprising: taking a halogenated polymer matrix and a lithium-chelating functional monomer as raw materials, and covalently connecting the lithium-chelating functional monomer to the polymer matrix via etherification grafting reaction, to form the lithium-ion selective resin as beads or particles.

In a fourth aspect, the present invention provides a method of preparing a lithium-ion selective resin via copolymerization, comprising: taking a 4-vinylbenzyl ether-bonded lithium-chelating functional monomer as raw material, and copolymerizing the functional monomer with 4-vinylstyrene and optional divinylbenzene to prepare the lithium-ion selective resin as beads or particles.

### BRIEF DESCRIPTION OF THE DRAWINGS

To better illustrate the technical solutions of the embodiments of the present invention, the accompanying drawings of the embodiments will be briefly described below. Clearly, the drawings described below merely relate to some embodiments of the present invention, and are not intended to limit the present invention.
FIG. 1 shows a performance test of the Lithium Extraction Resin 8P3 prepared in Example 11 for the dynamic lithium extraction from brines with low Na/Li, K/Li, Rb/Li, and Cs/Li ratios.
FIG. 2 shows a performance test of the Lithium Extraction Resin 8P3 prepared in Example 11 for the dynamic lithium extraction from brines with high Na/Li, K/Li, Rb/Li, and Cs/Li ratios.
FIG. 3 shows a recycling performance of the lithium extraction resin of Example 24.
FIG. 4 shows an infrared spectrogram of the lithium extraction resin of Example 25.
FIG. 5 shows a micrograph of the pre-grafting backbone resin of Example 26.
FIG. 6 shows a micrograph of the post-grafting lithium extraction resin of Example 26.

### DETAILED DESCRIPTION OF THE INVENTION

All publications and patents mentioned in the present invention are hereby incorporated by reference in their entirety. If any usage or term in the incorporated publications or patents conflicts with the usage or term in the present invention, the usage and term of the present invention shall prevail.

The section headings used herein are for organizational purposes only, and should not be construed as limiting the subject matter described.

Unless otherwise defined, all technical and scientific terms used herein have ordinary meaning as commonly understood in the art to which the subject matter claimed pertains. If there are multiple definitions for a term, the definition herein shall prevail.

Unless stated otherwise in the working examples or otherwise indicated, all numbers expressing quantitative properties such as dosages in the description and claims should be construed as being modified in all instances by the term "about." It should also be understood that any numerical range recited in this invention is intended to comprise all sub-ranges within that range and any combination of various endpoints of that range or sub-ranges. For example, integers from 1 to 20 comprise 1, 2, 3, 4, 5, 6, 7, 8, 9, 10, 11, 12, 13, 14, 15, 16, 17, 18, 19 and 20, and also comprise sub-ranges such as 1-3, 1-4, 1-10, 2-4, 2-10, etc.

As used herein, the words such as "comprise," "contain," or "comprise" mean that the element preceding the word encompasses the element(s) listed after the word and their equivalents, but do not exclude any unlisted elements. The term "contain" or "comprise (comprise)" as used herein can be open-ended, semi-closed, or closed-ended. In other words, the term also comprises "consist essentially of" or "consist of."

The term "optionally" in the present invention means that the described circumstance may or may not occur.

The present invention may be implemented in other specific forms without departing from the essential attributes of the invention. It should be understood that in the absence of conflict, any and all embodiments of the present invention can be combined with technical feature(s) from any other embodiment(s) to yield additional embodiments. The present invention comprises additional embodiments obtained by such combination.

The description of the present invention should be interpreted consistently with the laws and principles of chemical bonding. In some cases, hydrogen atom(s) may be removed to accommodate substituents at a given position.

In the present invention, the term "alkyl" refers to a branched or linear monovalent hydrocarbon group having *n* carbon atoms and *2n+1* hydrogen atoms. C₁-C₄ alkyl refers to a linear or branched saturated monovalent hydrocarbon group having 1 to 4 carbon atoms, e.g., methyl, ethyl, propyl, isopropyl, n-butyl, isobutyl, sec-butyl, or *tert*-butyl. In an embodiment, C₁-C₄ alkyl is preferably linear, i.e., methyl, ethyl, propyl, or n-butyl.

In the present invention, the term "alkoxy" refers to an alkyl group as defined above which is attached to the parent structure via an oxygen atom. Typical alkoxy groups comprise, but are not limited to, methoxy, ethoxy, propoxy, isopropoxy, n-butoxy, isobutoxy, sec-butoxy, isobutoxy, tert-butoxy, pentoxy, isopentoxy, *neo-*pentoxy, hexoxy, heptyloxy, octyloxy, 2-ethylhexoxy, nonyloxy, decyloxy, dodecyloxy, hexadecyloxy, etc.

In the present invention, the term "nitro" refers to an -NO₂ group.

In the present invention, the term "benzyloxy" refers to a monovalent group, PhCH₂O-, obtained by removing hydrogen atom from the hydroxyl group of benzyl alcohol.

In the present invention, the term "halo" or "halogen" refers to fluoro, chloro, bromo, or iodo. In some embodiments, the "halo" or "halogen" is chloro or bromo. In other embodiments, the "halo" or "halogen" is fluoro.

The present invention provides a lithium-ion selective resin comprising at least a 2-hydroxyphenyl ketone-based (or aldehyde-based) functional group having a structure of Formula (I): 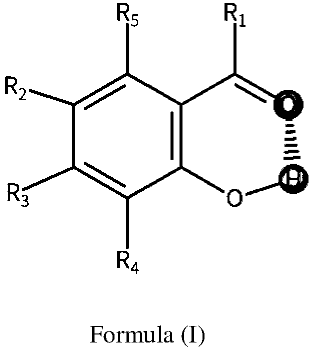
wherein, R₁ is hydrogen, optionally substituted C₁-C₄ alkyl or optionally substituted phenyl, wherein the substitution is carried out by a group selected from the group consisting of: C₁-C₄ alkyl, C₁-C₄ alkoxy, halogen, and phenyl;
R₂, R₃, R₄ and R₅ are each independently hydrogen, halogen, nitro, benzyloxy, C₁₋₄ alkyl, C₁₋₄ alkoxy, or a linking group, with the proviso that at least one of R₂, R₃, R₄ and R₅ is a linking group that connects the structure of Formula (I) to the polymer backbone via a covalent bond.

Optionally, R₁ in the structure of Formula (I) is hydrogen, methyl, or phenyl.

In an embodiment, one of R₂ to R₅ in the structure of Formula (I) is a linking group, and the rest are all H.

In another embodiment, one of R₂ to R₅ in the structure of Formula (I) is nitro. Preferably, the rest of R₂ to R₅ except for the nitro group and the linking group are H.

Preferably, among R₂ to R₅, the linking group which connects to the polymer backbone is an ether bond to graft a molecular structure containing Formula (I) onto the polymer backbone. For example, the lithium-ion selective resin has a structure of one of Formulae (II) to (V):

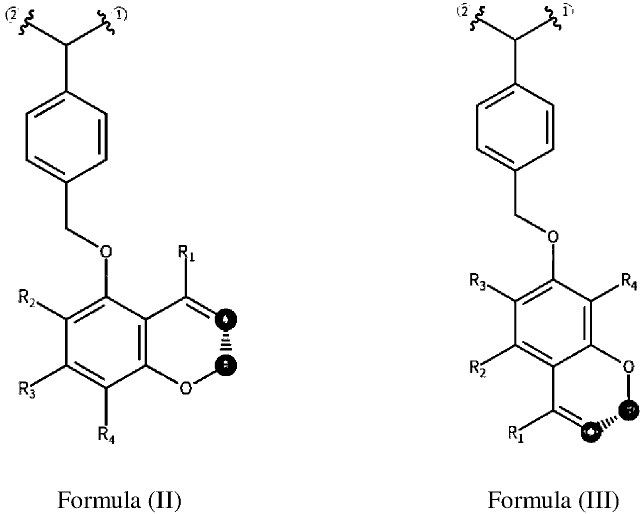

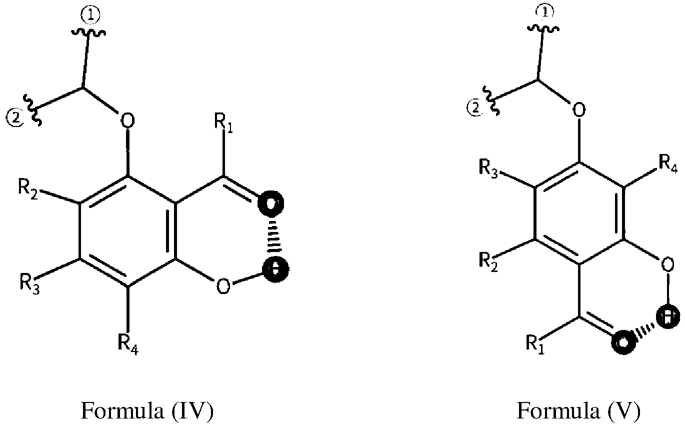

In an embodiment, R₁ in the structures shown in Formulae (II) to (V) is hydrogen, methyl, or phenyl, and R₂ to R₄ are all H.

In another embodiment, R₁ in the structures shown in Formulae (II) to (V) is hydrogen, methyl, or phenyl, one of R₂ to R₄ is nitro, and the rest are H.

Preferably, the polymer backbone is a polymer capable of undergoing halomethylation or halogenation.

For example, the polymer backbone is styrene-divinylbenzene copolymer, polyvinyl chloride, polyphenylene ether, polyetheretherketone, acrylonitrile-styrene copolymer, acrylonitrile-butadiene-styrene copolymer, ethylene-propylene rubber-styrene-acrylonitrile copolymer, acrylonitrile-butyl acrylate-styrene copolymer, acrylonitrile-vinyl chloride-styrene copolymer, methyl (meth)acrylate-butadiene-styrene copolymer, or styrene-butylene copolymer.

In an embodiment, the polymer backbone of the lithium-ion selective resin has a crosslinking degree of 0 to 7 wt%.

In an embodiment, the polymer backbone of the lithium-ion selective resin has a gel structure or macroporous structure. Preferably, the polymer backbone is spherical. For example, the polymer backbone spheres have a diameter of about 0.1-1.5 mm, about 0.2-1.2 mm, or about 0.5-1.5 mm.

In an embodiment, the polymer backbone of the lithium-ion selective resin is particle-like. Preferably, the polymer backbone particles have a particle size of about 12-160 mesh, e.g., about 15-150 mesh, about 20-100 mesh, or about 50-100 mesh.

In an embodiment, the 2-hydroxyphenyl ketone-based (or aldehyde-based) functional group having the structure of Formula (I) is derived from a lithium-chelating functional monomer selected from the group consisting of: 2,4-dihydroxybenzaldehyde, 2,4-dihydroxyacetophenone, 2,4-dihydroxypropiophenone, 2,4-dihydroxybutyrophenone, 2,4-dihydroxybenzophenone, 2,6-dihydroxybenzaldehyde, 2,6-dihydroxyacetophenone, 2,6-dihydroxypropiophenone, 2,6-dihydroxybutyrophenone, 2,6-dihydroxybenzophenone, 2,4-dihydroxy-5-nitrobenzaldehyde, 2,4-dihydroxy-5-nitro-acetophenone, 2,4-dihydroxy-5-nitropropiophenone, 2,4-dihydroxy-5-nitro-butyrophenone, 2,4-dihydroxy-5-nitro-benzophenone, 2,4-dihydroxy-3-nitro-benzaldehyde, 2,4-dihydroxy-3-nitroacetophenone, 2,4-dihydroxy-3-nitro-propiophenone, 2,4-dihydroxy-3-nitro-butyrophenone, 2,4-dihydroxy-3-nitro-benzophenone, 2,6-dihydroxy-3-nitrobenzaldehyde, 2,6-dihydroxy-3-nitro-acetophenone, 2,6-dihydroxy-3-nitropropiophenone, 2,6-dihydroxy-3-nitro-butyrophenone, 2,6-dihydroxy-3-nitro-benzophenone, 2,6-dihydroxy-5-nitro-benzaldehyde, 2,6-dihydroxy-5-nitroacetophenone, 2,6-dihydroxy-5-nitro-propiophenone, 2,6-dihydroxy-5-nitro-butyrophenone, 2,6-dihydroxy-5-nitro-benzophenone, any mixtures of the above-listed species, or halogenated derivatives thereof. For example, the 2-hydroxyphenyl ketone-based (or aldehyde-based) functional group having the structure of Formula (I) is grafted onto the resin through the ether bond formation between the lithium-chelating monomer and the polymer backbone.

In an embodiment, the lithium-chelating functional monomer has a grafting amount of about 0.01-5 mmol/g resin, e.g., about 0.1-1 mmol/g resin, about 0.5-3 mmol/g resin, or about 1.5-4.5 mmol/g resin.

In an embodiment, the lithium-ion selective resin material further comprises a hydrophilicity-improving modifying group. Preferably, the hydrophilicity-improving modifying group comprises one or more of sulfonate group, carboxylate group, phosphate group, phenolic hydroxyl group, alcoholic hydroxyl group, iminodiacetate group, primary amine group, secondary amine group, and quaternary ammonium group.

For example, the hydrophilicity-improving modifying group is derived from benzenesulfonic acid, benzoic acid, benzyl alcohol, acrylic acid, phosphoramidic acid, iminodiacetic acid, phenol, allyl alcohol, trimethylamine quaternary ammonium salt, triethylamine quaternary ammonium salt, triethanolamine quaternary ammonium salt, or tri-isopropanolamine quaternary ammonium salt.

In an embodiment, the hydrophilicity-improving modifying group has a grafting amount of about 0-3 mmol/g resin, e.g., about 0.1-1 mmol/g resin, or about 0.5-2.5 mmol/g resin.

Preferably, the lithium-ion selective resin further comprises a cation exchange group or an anion exchange group.

In an embodiment, the lithium-ion selective resin further comprises a covalently bonded neutral chelating functional group. Preferably, the neutral chelating functional group is a ketone group, ester group, phosphine oxide group, or crown ether groups. For example, the neutral chelating functional group is ethyl benzoate group, (2-hydroxybenzyl)diphenylphosphine oxide group, 2,5-dihydroxyphenyldiphenylphosphine oxide group, benzo-12-crown-4 group, and/or dibenzo-14-crown-4 group.

In an embodiment, the neutral chelating functional group has a grafting amount of about 0-3 mmol/g resin, e.g., about 0.1-0.5 mmol/g resin or about 0.5-2.5 mmol/g resin.

Preferably, the lithium-ion selective resin has a lithium saturated exchange capacity of about 0.05 to 1 mmol/g resin, e.g., about 0.1 to 0.9 mmol/g resin.

The present invention also provides a method of extracting lithium, comprising contacting the lithium-ion selective resin with a lithium-containing solution, and then separating the lithium-ion selective resin.

The lithium-ion selective resin can be used to extract lithium from lithium-containing aqueous solutions. The lithium-containing aqueous solutions are, e.g., neutral or alkaline salt lake brines, geothermal brines, or lithium carbonate or lithium phosphate precipitation mother liquors, which have low magnesium and calcium content.

For example, the lithium ion-containing aqueous solution has a pH value of about 5-13, preferably about 8-12.5. For an alkaline natural brine, it can be directly contacted with the lithium-ion selective resin, thereby the lithium ions in the brine are loaded onto the lithium-ion selective resin. For a lithium-containing aqueous solution with pH < 7, its pH and alkalinity can be adjusted to about 8-13 by adding hydroxide, carbonate, phosphate, or borate of alkali metals or ammonium.

The method of extracting lithium can further comprise a step of regenerating the resin after contacting the lithium-ion selective resin with the lithium-containing solution. For example, a stripping agent can be used to interact with the lithium-ion-loaded lithium-ion selective resin, thereby transferring lithium ions into the stripping agent, while restoring the lithium-ion selective resin's ability to extract lithium from a lithium-containing aqueous solution. The stripping agent is an aqueous solution of acid. Preferably, the acid is one or more of carbonic acid, sulfuric acid, sulfurous acid, hydrochloric acid, nitric acid, and phosphoric acid.

The present invention also provides a method of preparing a lithium-ion selective resin via grafting reaction, comprising: taking a halogenated polymer matrix and a lithium-chelating functional monomer as raw materials, and covalently bonding the lithium-chelating functional monomer to the polymer matrix via etherification grafting reaction to form the lithium-ion selective resin as beads or particles.

In an embodiment, the etherification grafting reaction is as follows. At least one of acetone, acetonitrile, tetrahydrofuran, N,N-dimethylformamide, and N,N-dimethylacetamide is used as solvent. At least one of lithium carbonate, sodium carbonate, potassium carbonate, rubidium carbonate, and cesium carbonate is used as base. The molar ratio of the lithium-chelating functional monomer to the halogen in the polymer matrix is about 0.2-1.2, e.g., about 0.5-1.0, and the molar ratio of the base to the lithium-chelating functional monomer is about 0.2-1.2, e.g., about 0.5-1.0. The amount of solvent is about 2-20 times the mass of the polymer matrix, e.g., about 2-5 times. The grafting reaction temperature is about 40-120°C, e.g., about 40-90°C. The reaction time is about 2-72 h, e.g., about 2-8 h.

Preferably, the method of preparing the lithium-ion selective resin further comprises recovering the solvent by filtration after the grafting reaction is completed, and recycling the recovered solvent for use.

For example, the polymer matrix is a spherical chloromethylated styrene-divinylbenzene copolymer. Preferably, the spherical chloromethylated styrene-divinylbenzene copolymer further contains a sulfonate group, phosphonate group, or carboxylate group.

In an embodiment, the spherical chloromethylated styrene-divinylbenzene copolymer has a chlorine content of about 5-30 wt%, e.g., about 5-10 wt%.

In an embodiment, the crosslinking degree of the spherical chloromethylated styrene-divinylbenzene copolymer is about 0-5%, e.g., about 0.5-2%.

For example, the spherical chloromethylated styrene-divinylbenzene copolymer can be prepared by chloromethylation of styrene-divinylbenzene copolymer unfunctionalized beads.

In an embodiment, the etherification grafting reaction is carried out by adding tetrabutylammonium chloride, tetrabutylammonium bromide, or tetrabutylammonium iodide as phase transfer catalyst.

Preferably, the etherification grafting reaction is carried out by adding potassium iodide as catalyst.

The present invention also provides a method of preparing a lithium-ion selective resin via a copolymerization, comprising: taking a 4-vinylbenzyl ether-bonded lithium-chelating functional monomer as the raw material, copolymerizing the functional monomer with 4-vinylstyrene and optional divinylbenzene to prepare the lithium-ion selective resin as beads or particles. Here, the optional divinylbenzene means that divinylbenzene may or may not be present.

Preferably, the copolymerization preparation of resin beads or particles is carried out by suspension polymerization. For example, the 4-vinylbenzyl ether-bonded lithium-chelating functional monomer is mixed with liquid styrene, optional divinylbenzene, and an initiator. Then, the above mixture is added dropwise to an aqueous solution containing a salt such as sodium chloride and a reinforcing dispersing aid such as polyvinyl alcohol under heating to react with vigorous stirring, thereby obtaining a spherical or granular lithium-ion selective resin. The initiator can be, e.g., an oil-soluble initiator such as azobisisobutyronitrile, azobisisoheptonitrile, azobisisovaleronitrile, azodicyclohexylcarbonitrile, dimethyl azobisisobutyrate, or benzoyl peroxide. Preferably, the molar ratio of styrene to the 4-vinylbenzyl ether-bonded lithium-chelating functional monomer is about 0.2-3, e.g., about 0.5-2. Preferably, divinylbenzene accounts for about 0-7% by weight based on the total weight of styrene plus the 4-vinylbenzyl ether-bonded lithium-chelating functional monomer. When divinylbenzene accounts for 0% by weight based on the total weight of styrene plus the 4-vinylbenzyl ether-bonded lithium-chelating functional monomer , it means that no divinylbenzene is added in the copolymerization.

The 4-vinylbenzyl ether-bonded lithium-chelating functional monomer can be prepared by reacting the lithium-chelating functional monomer of Formula (VI) with 4-vinylbenzyl chloride via etherification. 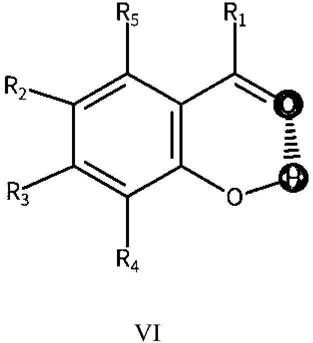
R₁ is hydrogen, optionally substituted C₁-C₄ alkyl, or optionally substituted phenyl, wherein the substitution is carried out by a group selected from the group consisting of: C₁-C₄ alkyl, C₁-C₄ alkoxy, halogen, and phenyl;
R₂, R₃, R₄, and R₅ are each independently hydroxyl, hydrogen, halogen, nitro, benzyloxy, C₁-₄ alkyl, or C₁-₄ alkoxy, with the proviso that at least one of R₂, R₃, R₄, and R₅ is hydroxyl. For example, R₃ or R₅ is hydroxyl.

Exemplary lithium-chelating functional monomers of Formula (VI) can comprise 2,4-dihydroxybenzaldehyde, 2,4-dihydroxyacetophenone, 2,4-dihydroxypropiophenone, 2,4-dihydroxybutyrophenone, 2,4-dihydroxybenzophenone, 2,6-dihydroxybenzaldehyde, 2,6-dihydroxyacetophenone, 2,6-dihydroxypropiophenone, 2,6-dihydroxybutyrophenone, 2,6-dihydroxybenzophenone, 2,4-dihydroxy-5-nitro-benzaldehyde, 2,4-dihydroxy-5-nitro-acetophenone, 2,4-dihydroxy-5-nitro-propiophenone, 2,4-dihydroxy-5-nitro-butyrophenone, 2,4-dihydroxy-5-nitro-benzophenone, 2,4-dihydroxy-3-nitro-benzaldehyde, 2,4-dihydroxy-3-nitro-acetophenone, 2,4-dihydroxy-3-nitro-propiophenone, 2,4-dihydroxy-3-nitro-butyrophenone, 2,4-dihydroxy-3-nitro-benzophenone, 2,6-dihydroxy-3-nitro-benzaldehyde, 2,6-dihydroxy-3-nitro-acetophenone, 2,6-dihydroxy-3-nitro-propiophenone, 2,6-dihydroxy-3-nitro-butyrophenone, 2,6-dihydroxy-3-nitro-benzophenone, 2,6-dihydroxy-5-nitro-benzaldehyde, 2,6-dihydroxy-5-nitroacetophenone, 2,6-dihydroxy-5-nitro-propiophenone, 2,6-dihydroxy-5-nitro-butyrophenone, 2,6-dihydroxy-5-nitro-benzophenone, or any mixture of the above-listed species.

The etherification reaction of the lithium-chelating functional monomer of Formula (VI) with 4-vinylbenzyl chloride is carried out, e.g., in the presence of a base such as one or more of lithium carbonate, sodium carbonate, potassium carbonate, rubidium carbonate, and cesium carbonate.

In an embodiment, the copolymerization further comprises adding a monomer for improving the hydrophilicity of the lithium-ion selective resin to copolymerize with the vinylbenzyl ether-bonded lithium-chelating functional monomer, styrene, and optional divinylbenzene. Preferably, in the copolymerization method for preparing the lithium-ion selective resin, the monomer for improving the hydrophilicity of the lithium-ion selective resin is added in an amount about 0-3 mmol/g resin, e.g., about 0.1-1 mmol/g resin, about 0.5-2.5 mmol/g resin.

The monomer for improving the hydrophilicity of the lithium-ion selective resin may contain a hydrophilicity-improving modifying group, such as one or more of sulfonate group, carboxylate group, phosphate group, phenolic hydroxyl group, alcoholic hydroxyl group, iminodiacetate group, primary amine group, secondary amine group, and quaternary ammonium group.

For example, examples of the monomers for improving the hydrophilicity of the lithium-ion selective resin may comprise 4-vinylbenzenesulfonic acid (or its sodium salt, 4-vinylbenzoic acid (or its sodium salt), (4-vinylbenzyl)trimethylammonium chloride, or 4-vinylbenzyl alcohol.

In an embodiment, the copolymerization further comprises adding 4-vinylbenzenesulfonic acid (or its sodium salt), (4-vinylbenzyl)trimethylammonium chloride, or 4-vinylbenzyl alcohol to copolymerize with the vinylbenzyl ether-bonded lithium-chelating functional monomer, styrene, and divinylbenzene to improve the hydrophilicity of the lithium-ion selective resin.

To make the purpose, technical solutions, and advantages of the embodiments of the present invention clearer, the specific examples of the present invention are clearly and completely described below. The examples described below are exemplary and only intended to explain the present invention, and shall not be construed as limiting the present invention. Based on the described examples of the present invention, all other implementations obtained by ordinary technicians in the field without creative work shall fall within the protection scope of the present invention.

In the examples, if no specific technique or condition is indicated, the procedure shall be carried out according to the techniques or conditions described in the literature in the relevant field or according to the product instructions. Any reagents or instruments used without a specified manufacturer are conventional products that are commercially available.

Unless otherwise defined, technical or scientific terms used in the following examples shall have the ordinary meaning as understood by ordinary persons skilled in the art to which the present invention belongs.

### EXAMPLE 1

The chloromethylated styrene-divinylbenzene copolymer intermediate was used as a polymer backbone to graft 2,4-dihydroxybenzophenone: To 20 g of dried spherical chloromethylated styrene-divinylbenzene copolymer intermediate (<30 mesh, with a divinylbenzene content of 0.5% and a chlorine content of 20 wt%) in a 250 mL round-bottom flask was added 120 mL of N,N-dimethylformamide (DMF). The mixture was stirred at room temperature and allowed to swell for 2 hours, and then 90 mmol of 2,4-dihydroxybenzophenone, 100 mmol of potassium carbonate, and 0.5 g of potassium iodide were added. The mixture was heated to 90°C, and reacted with stirring for 16 hours. After the reaction was completed, the mixture was naturally cooled to room temperature. The DMF mother liquor was removed by suction filtration. The resin beads were washed multiple times with 0.1 M dilute sulfuric acid, and then washed multiple times with 0.3 M sodium hydroxide solution to obtain 62 g of wet lithium extraction resin with a water content of 33 wt.%, which was designated as Lithium Extraction Resin 1.

### EXAMPLE 2

The chloromethylated styrene-divinylbenzene copolymer intermediate was used as a polymer backbone to graft 2,4-dihydroxy-5-nitro-benzophenone: To 20 g of dried spherical chloromethylated styrene-divinylbenzene copolymer intermediate (<30 mesh, with a divinylbenzene content of 0.5% and a chlorine content of 20 wt%) in a 250 mL round-bottom flask was added 120 mL of N,N-dimethylformamide (DMF). The mixture was stirred at room temperature and allowed to swell for 2 hours, and then 90 mmol of 2,4-dihydroxy-5-nitro-benzophenone, 100 mmol of potassium carbonate, and 0.5 g potassium iodide were added. The mixture was heated to 90°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 69 g of wet lithium extraction resin with a resin water content of 34 wt.%, which was designated as Lithium Extraction Resin 2.

### EXAMPLE 3

The chloromethylated styrene-divinylbenzene copolymer intermediate was used as a polymer backbone to graft 2,4-dihydroxyacetophenone: To 20 g of dried spherical chloromethylated styrene-divinylbenzene copolymer intermediate (<30 mesh, with a divinylbenzene content of 0.5% and a chlorine content of 20 wt%) in a 250 mL round-bottom flask was added 120 mL of N,N-dimethylformamide (DMF). The mixture was stirred at room temperature and allowed to swell for 2 hours, and then 90 mmol of 2,4-dihydroxyacetophenone, 100 mmol of potassium carbonate, and 0.5 g potassium iodide were added. The mixture was heated to 90°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 55 g of wet lithium extraction resin with a resin water content of 33 wt.%, which was designated as Lithium Extraction Resin 3.

### EXAMPLE 4

The chloromethylated styrene-divinylbenzene copolymer intermediate was used as a polymer backbone to graft 2,4-dihydroxy-5-nitro-acetophenone: To 20 g of dried spherical chloromethylated styrene-divinylbenzene copolymer intermediate (<30 mesh, with a divinylbenzene content of 0.5% and a chlorine content of 20 wt%) in a 250 mL round-bottom flask was added 120 mL of N,N-dimethylformamide (DMF). The mixture was stirred at room temperature and allowed to swell for 2 hours, and then 90 mmol of 2,4-dihydroxy-5-nitro-acetophenone, 100 mmol of potassium carbonate, and 0.5 g potassium iodide were added. The mixture was heated to 90°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 67 g of wet lithium extraction resin with a resin water content of 34 wt.%, which was designated as Lithium Extraction Resin 4.

### EXAMPLE 5

The chloromethylated styrene-divinylbenzene copolymer intermediate was used as a polymer backbone to graft 2,4-dihydroxy-5-nitro-acetophenone: To 20 g of dried spherical chloromethylated styrene-divinylbenzene copolymer intermediate (< 14 mesh, with a divinylbenzene content of 2% and a chlorine content of 15 wt%) in a 250 mL round-bottom flask was added 120 mL of N,N-dimethylformamide (DMF). The mixture was stirred at room temperature and allowed to swell for 2 hours, and then 70 mmol of 2,4-dihydroxy-5-nitro-acetophenone, 80 mmol of potassium carbonate, and 0.5 g potassium iodide were added. The mixture was heated to 70°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 49 g of wet lithium extraction resin with a resin water content of 28 wt.%, which was designated as Lithium Extraction Resin 5.

### EXAMPLE 6

The chloromethylated styrene-divinylbenzene copolymer intermediate was used as a polymer backbone to graft 2,4-dihydroxy-5-nitro-acetophenone: To 20 g of dried spherical chloromethylated styrene-divinylbenzene copolymer intermediate (< 14 mesh, with a divinylbenzene content 5% and a chlorine content 15 wt%) in a 250 mL round-bottom flask was added 120 mL of N,N-dimethylformamide (DMF). The mixture was stirred at room temperature and allowed to swell for 2 hours, and then 70 mmol of 2,4-dihydroxy-5-nitro-acetophenone, 80 mmol of potassium carbonate, and 0.5 g potassium iodide were added. The mixture was heated to 70°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 44 g of wet lithium extraction resin, with a resin water content of 19 wt.%, which was designated as Lithium Extraction Resin 6.

### EXAMPLE 7

The chloromethylated styrene-divinylbenzene copolymer intermediate was used as a polymer backbone to graft 2,4-dihydroxy-5-nitro-acetophenone: To 20 g of dried spherical chloromethylated styrene-divinylbenzene copolymer intermediate (<100 mesh, with a divinylbenzene content of 0.5% and a chlorine content of 20 wt%) in a 250 mL round-bottom flask was added 120 mL of N,N-dimethylformamide (DMF). The mixture was stirred at room temperature and allowed to swell for 2 hours, and then 90 mmol of 2,4-dihydroxy-5-nitro-acetophenone, 100 mmol of potassium carbonate, and 0.5 g potassium iodide were added. The mixture was heated to 90°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 70 g of wet lithium extraction resin with a resin water content of 34 wt.%, which was designated as Lithium Extraction Resin 7.

### EXAMPLE 8

The chloromethylated styrene-divinylbenzene copolymer intermediate was used as a polymer backbone to graft 2,4-dihydroxy-5-nitro-benzophenone: To 20 g of dried spherical chloromethylated styrene-divinylbenzene copolymer intermediate (<100 mesh, with a divinylbenzene content of 0.5% and a chlorine content of 20 wt%) in a 250 mL round-bottom flask was added 120 mL of N,N-dimethylformamide (DMF). The mixture was stirred at room temperature and allowed to swell for 2 hours, and then 60 mmol of 2,4-dihydroxy-5-nitro-benzophenone, 70 mmol of potassium carbonate, and 0.5 g potassium iodide were added. The mixture was heated to 90°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 70 g of wet lithium extraction resin with a resin water content of 34 wt%, which was designated as Lithium Extraction Resin 8.

### EXAMPLE 9

Hydrophilic modification of the Lithium Extraction Resin 8: 30 g of the Lithium Extraction Resin 8 after being cleaned and dried was placed in a 250 mL round-bottom flask, and 100 mL of tetrahydrofuran was added. The resin was allowed to swell for 2 hours, and then trimethylamine hydrochloride and solid sodium hydroxide were added, each in an amount of 20 mmol. The mixture was reacted with stirring at room temperature for 10 hours, and then the reaction mother liquor was removed by suction filtration. The resin was washed multiple times with water to obtain the hydrophilically modified Lithium Extraction Resin 8, which was designated as Lithium Extraction Resin 8P1.

### EXAMPLE 10

Hydrophilic modification of the Lithium Extraction Resin 8: 30 g of the Lithium Extraction Resin 8 after being cleaned and dried was placed in a 250 mL round-bottom flask, and 100 mL of tetrahydrofuran was added. The resin was allowed to swell for 2 hours, and then 20 mmol of triethanolamine was added. The mixture was reacted with stirring at 50°C for 10 hours, and then the reaction mother liquor was removed by suction filtration. The resin was washed multiple times with water to obtain the hydrophilically modified Lithium Extraction Resin 8, which was designated as Lithium Extraction Resin 8P2.

### EXAMPLE 11

Neutral synergistic chelating ligand modification of the Lithium Extraction Resin 8: 30 g of the Lithium Extraction Resin 8 after being cleaned and dried was placed in a 250 mL round-bottom flask, and 100 mL of DMF was added. The resin was allowed to swell for 2 hours, and then 40 mmol of (2-hydroxybenzyl)diphenylphosphine oxide, 50 mmol of potassium carbonate, and 0.5 g potassium iodide were added. The mixture was heated to 90°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 78 g of wet lithium extraction resin with a resin water content of 35 wt%, which was designated as Lithium Extraction Resin 8P3.

### EXAMPLE 12

Neutral synergistic chelating ligand modification of the Lithium Extraction Resin 8: 30 g of the Lithium Extraction Resin 8 after being cleaned and dried was placed in a 250 mL round-bottom flask, and 100 mL DMF was added. The resin was allowed to swell for 2 hours, and then 30 mmol of hydroxybenzo-12-crown-4, 40 mmol of potassium carbonate, and 0.5 g of potassium iodide were added. The mixture was heated to 90°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 59 g of wet lithium extraction resin with a resin water content of 33 wt%, which was designated as Lithium Extraction Resin 8P4.

### EXAMPLE 13

Preparation of chloromethylated styrene-divinylbenzene copolymer sulfonated intermediate: To 200 g of dried spherical chloromethylated styrene-divinylbenzene copolymer intermediate (<30 mesh, with a divinylbenzene content of 0.5% and a chlorine content of 20 wt%) in a 1000 mL round-bottom flask was added 1000 mL of dichloroethane. The mixture was stirred at room temperature and allowed to swell for 2 hours, and then heated to 60°C. 50 mL of 98 wt% concentrated sulfuric acid was slowly added dropwise, and the mixture was reacted with stirring. After 2 hours, the resin turned brown, and the reaction was stopped. The mixture was distilled under reduced pressure at 60°C to remove the dichloroethane solvent. The resin was washed multiple times with water until neutral, converted to the sodium form by adding 30 g of 30 wt% sodium hydroxide, and then dried at 70°C to obtain 280 g of the sulfonated intermediate.

### EXAMPLE 14

20 g of the chloromethylated styrene-divinylbenzene copolymer sulfonated intermediate prepared in Example 13 was placed in a 250 mL round-bottom flask, and 120 mL of N,N-dimethylformamide (DMF) was added. The mixture was stirred at room temperature and allowed to swell for 2 hours, and then 90 mmol of 2,4-dihydroxybenzophenone, 100 mmol of potassium carbonate, and 0.5 g of potassium iodide were added. The mixture was heated to 90°C and reacted with stirring for 16 hours. After the reaction was completed, the mixture was naturally cooled to room temperature. The DMF mother liquor was removed with suction filtration. The resin beads were washed multiple times with 0.1 M dilute sulfuric acid, and then washed multiple times with 0.3 M sodium hydroxide solution to obtain 62 g of wet lithium extraction resin with a resin water content of 33 wt.%, which was designated as Lithium Extraction Resin 14.

### EXAMPLE 15

Grafting of 2,4-dihydroxybenzophenone onto polyvinyl chloride as a polymer backbone: To 20 g of polyvinyl chloride powder (<100 mesh, with a chlorine content of 56-58 wt%) in a 250 mL round-bottom flask was added 120 mL of N,N-dimethylformamide (DMF). The mixture was stirred at room temperature for 2 hours until dissolved, and then 90 mmol of 2,4-dihydroxybenzophenone, 100 mmol of cesium carbonate, and 0.5 g of potassium iodide were added. The mixture was heated to 90°C, and reacted with stirring for 16 hours. After the reaction was completed, the mixture was naturally cooled to room temperature, and 500 mL water was added. The DMF + water mixture was removed by suction filtration. The resin powder was washed multiple times with 0.1 M dilute sulfuric acid, and then washed multiple times with 0.3 M sodium hydroxide solution to obtain 42 g of wet lithium extraction resin powder, which was designated as Lithium Extraction Resin 15.

### EXAMPLE 16

Grafting of 2,4-dihydroxybenzophenone onto poly(2,6-dimethyl-1,4-phenylene oxide) (PPO) as a polymer backbone: To 20 g of poly(2,6-dimethyl-1,4-phenylene oxide) (PPO) powder in a 250 mL round-bottom flask was added 120 mL dichloroethane. The mixture was stirred at room temperature for 2 hours until dissolved, and then 90 mmol of N-bromosuccinimide (NBS) was added. The mixture was heated to reflux, reacted for 8 hours, and then distilled under reduced pressure to remove the dichloroethane solvent to obtain the bromomethylated PPO. Then, the bromomethylated PPO was completely dissolved in 150 mL of N,N-dimethylformamide (DMF), and 90 mmol of 2,4-dihydroxybenzophenone, 100 mmol of potassium carbonate, and 0.5 g of potassium iodide were added. The mixture was heated to 90°C, and reacted with stirring for 16 hours. After the reaction was completed, the mixture was naturally cooled to room temperature, and 500 mL water was added. The DMF + water mixture was removed by suction filtration. The resin powder was washed multiple times with 0.1 M dilute sulfuric acid, and then washed multiple times with 0.3 M sodium hydroxide solution to obtain 50 g of wet lithium extraction resin powder, which was designated as Lithium Extraction Resin 16.

### EXAMPLE 17

Suspension copolymerization of styrene-divinylbenzene-4-(4-vinylbenzyloxy)-2-hydroxybenzophenone: 1) 4-(4-vinylbenzyloxy)-2-hydroxybenzophenone polymerizable monomer was prepared as follows: 90 mmol of 2,4-dihydroxybenzophenone, 100 mmol of potassium carbonate, and 0.5 g of tetrabutylammonium bromide catalyst were added to 200 mL of acetone solvent. The mixture was heated to 70°C for 0.5 hours until dissolved, and then 90 mmol of 4-vinylbenzyl chloride was added dropwise. After the addition was completed, the mixture was reacted for 7 hours. Then, the solid product was precipitated by adding 500 mL of deionized water, filtered with suction, washed multiple times, and dried to obtain 30 g of product for later use. 2) 100 g of styrene was washed multiple times with 10 wt% aqueous sodium hydroxide solution to remove the polymerization inhibitor for later use. 7 g of divinylbenzene was washed multiple times with 10 wt% aqueous sodium hydroxide solution to remove the polymerization inhibitor for later use. 30 g of 4-(4-vinylbenzyloxy)-2-hydroxybenzophenone was mixed with the 100 g of styrene and 7 g of divinylbenzene from which the polymerization inhibitor was removed, and 2.5 g of benzoyl peroxide was added. The mixture was mixed uniformly, and then added dropwise to an aqueous phase of suspension polymerization under vigorous stirring. The preparation procedure of the aqueous phase of suspension polymerization was as follows: 400 mL of deionized water, 100 g of sodium chloride, and 5 g of polyvinyl alcohol were added to a 1000 mL round-bottom flask, and stirred until a uniform solution was formed. The reaction temperature was 80°C, and the polymerization time was 8 hours. After the reaction was completed, the solution was removed by filtration to obtain 120 g of lithium extraction resin as beads, which was designated as Lithium Extraction Resin 17.

### EXAMPLE 18

Suspension copolymerization of styrene-divinylbenzene-4-(4-vinylbenzyloxy)-2-hydroxybenzophenone-4-vinylbenzenesulfonic acid: 1) 4-(4-vinylbenzyloxy)-2-hydroxybenzophenone polymerizable monomer was prepared as follows: 90 mmol of 2,4-dihydroxybenzophenone, 100 mmol of potassium carbonate, and 0.5 g of tetrabutylammonium bromide catalyst were added to 200 mL of acetone solvent. The mixture was heated to 70°C for 0.5 hours until dissolved, and then 90 mmol of 4-vinylbenzyl chloride was added dropwise. The mixture was reacted for 7 hours after the addition was completed. Then, the solid product was precipitated by adding 500 mL of deionized water, filtered with suction, washed multiple times, and dried to obtain 30 g of product for later use. 2) 100 g of styrene was washed multiple times with 10 wt% aqueous sodium hydroxide solution to remove the polymerization inhibitor for later use. 7 g of divinylbenzene was washed multiple times with 10 wt% aqueous sodium hydroxide solution to remove the polymerization inhibitor for later use. 30 g of 4-(4-vinylbenzyloxy)-2-hydroxybenzophenone was mixed with the 100 g of styrene and 7 g of divinylbenzene from which the polymerization inhibitor was removed and 10 g of 4-vinylbenzenesulfonic acid, and 3.5 g benzoyl peroxide was added. The mixture was mixed uniformly, and then added dropwise to an aqueous phase of suspension polymerization under vigorous stirring. The preparation procedure of the aqueous phase of suspension polymerization was as follows: 400 mL of deionized water, 100 g of sodium chloride, and 5 g of polyvinyl alcohol were added to a 1000 mL round-bottom flask, and stirred until a uniform solution was formed. The reaction temperature was 90°C, and the polymerization time was 6 hours. After the reaction was completed, the solution was removed by filtration to obtain 130 g of lithium extraction resin as beads, which was designated as Lithium Extraction Resin 18.

### EXAMPLE 19

Suspension copolymerization of styrene-divinylbenzene-4-(4-vinylbenzyloxy)-2-hydroxybenzophenone-triethyl(4-vinylbenzyl)ammonium chloride: 1) 4-(4-vinylbenzyloxy)-2-hydroxybenzophenone polymerizable monomer was prepared as follows: 90 mmol of 2,4-dihydroxybenzophenone, 100 mmol of potassium carbonate, and 0.5 g of tetrabutylammonium bromide catalyst were added to 200 mL of acetone solvent. The mixture was heated to 70°C for 0.5 hours until dissolved, and then 90 mmol of 4-vinylbenzyl chloride was added dropwise. The mixture was reacted for 7 hours after the addition was completed. The solid product was precipitated by adding 500 mL of deionized water, filtered with suction, washed multiple times, and dried to obtain 30 g of product for later use. 2) 100 g of styrene was washed multiple times with 10 wt% aqueous sodium hydroxide solution to remove the polymerization inhibitor for later use. 7 g divinylbenzene was washed multiple times with 10 wt% aqueous sodium hydroxide solution to remove the polymerization inhibitor for later use. 30 g of 4-(4-vinylbenzyloxy)-2-hydroxybenzophenone was mixed with the 100 g of styrene and 7 g of divinylbenzene from which the polymerization inhibitor was removed and 15 g of triethyl(4-vinylbenzyl)ammonium chloride, and 3.5 g of benzoyl peroxide was added. The mixture was mixed uniformly, and then added dropwise to an aqueous phase of suspension polymerization under vigorous stirring. The preparation procedure of the aqueous phase of suspension polymerization was as follows: 400 mL of deionized water, 100 g of sodium chloride, and 5 g of polyvinyl alcohol were added to a 1000 mL round-bottom flask, and stirred until a uniform solution was formed. The reaction temperature was 90°C, and the polymerization time was 6 hours. After the reaction was completed, the solution was removed with filtration to obtain 137 g of lithium extraction resin as beads, which designated as Lithium Extraction Resin 19.

### EXAMPLE 20

Static lithium exchange performance test of the lithium extraction resins prepared in Examples 1-19: 1) The experimental raw material brine was 0.25 mol/L aqueous lithium hydroxide solution (with a lithium concentration of 1.73 g/L). 2) The experimental procedure was as follows: To 5 g of wet resin was added 20 mL of the experimental raw material brine. The mixture was shaken at room temperature for 24 hours, and the residual liquid was diluted. The lithium content was measured by ion chromatography (IC), and the exchange capacity was calculated. The results are listed in Table 1 below:

**Table 1: Static Lithium Exchange Performance Of Lithium Extraction Resins Prepared In Examples 1-19**

| Lithium extraction resin No. | Equilibrium lithium concentration (g/L) | Exchange lithium capacity (mg/g wet resin) |
|---|---|---|
| 1 | 1.12 | 2.44 |
| 2 | 0.86 | 3.48 |
| 3 | 1.26 | 1.88 |
| 4 | 0.71 | 4.08 |
| 5 | 0.79 | 3.76 |
| 6 | 1.34 | 1.56 |
| 7 | 0.57 | 4.64 |
| 8 | 0.57 | 4.64 |
| 8P1 | 0.22 | 6.04 |
| 8P2 | 0.21 | 6.08 |
| 8P3 | 0.25 | 5.92 |
| 8P4 | 0.30 | 5.72 |
| 14 | 0.12 | 6.44 |
| 15 | 1.38 | 1.40 |
| 16 | 1.27 | 1.84 |
| 17 | 0.62 | 4.44 |
| 18 | 0.33 | 5.60 |
| 19 | 0.47 | 5.04 |

### EXAMPLE 21

Static lithium/sodium, lithium/potassium, lithium/rubidium, and lithium/cesium separation performance test of the lithium extraction resins prepared in Examples 1-19: 1) The experimental raw material brine was a mixed aqueous solution of lithium hydroxide, sodium hydroxide, potassium hydroxide, rubidium hydroxide, and cesium hydroxide (wherein Li⁺ = 0.376 g/L, Na⁺ = 0.498 g/L, K⁺ = 0.442 g/L, Rb⁺ = 0.741 g/L, Cs⁺ = 1.477 g/L, and pH = 13). 2) The experimental procedure was as follows: To 5 g of wet resin was added 20 mL of the experimental raw material brine. The mixture was shaken at room temperature for 24 hours, and the residual liquid was diluted. The contents of lithium, sodium, potassium, rubidium, and cesium were measured by ion chromatography (IC), and the separation factors α (A/B) were calculated. The results are listed in Table 2 below.

**Table 2: Static Lithium/Sodium, Lithium/Potassium, Lithium/Rubidium, And Lithium/Cesium Separation Performance Of Lithium Extraction Resins Prepared In Examples 1-19**

| Lithium extraction resins No. | α (Li/Na) | α (Li/K) | α (Li/Rb) | α (Li/Cs) |
|---|---|---|---|---|
| 1 | 5.2 | 8.0 | 8.8 | 9.2 |
| 2 | 4.4 | 6.1 | 8.7 | 9.7 |
| 3 | 5.1 | 7.4 | 7.3 | 8.6 |
| 4 | 5.8 | 7.3 | 7.2 | 9.0 |
| 5 | 6.8 | 9.3 | 11.2 | 15 |
| 6 | 7.2 | 10.1 | 11.2 | 14.8 |
| 7 | 3.7 | 5.4 | 7.2 | 8.0 |
| 8 | 3.2 | 5.1 | 7.4 | 8.2 |
| 8P1 | 3.2 | 5.1 | 7.4 | 8.2 |
| 8P2 | 3.0 | 4.9 | 7.1 | 9.2 |
| 8P3 | 10.3 | 14.4 | 15.5 | 18.1 |
| 8P4 | 13.7 | 20.5 | 27.3 | 30.5 |
| 14 | 2.7 | 4.5 | 6.1 | 6.2 |
| 15 | 5.7 | 8.9 | 8.3 | 10.4 |
| 16 | 5.1 | 8.0 | 9.2 | 9.3 |
| 17 | 8.7 | 10.2 | 15.5 | 19.7 |
| 18 | 3.2 | 4.9 | 7.2 | 9.1 |
| 19 | 3.5 | 5.6 | 6.3 | 8.8 |

### EXAMPLE 22

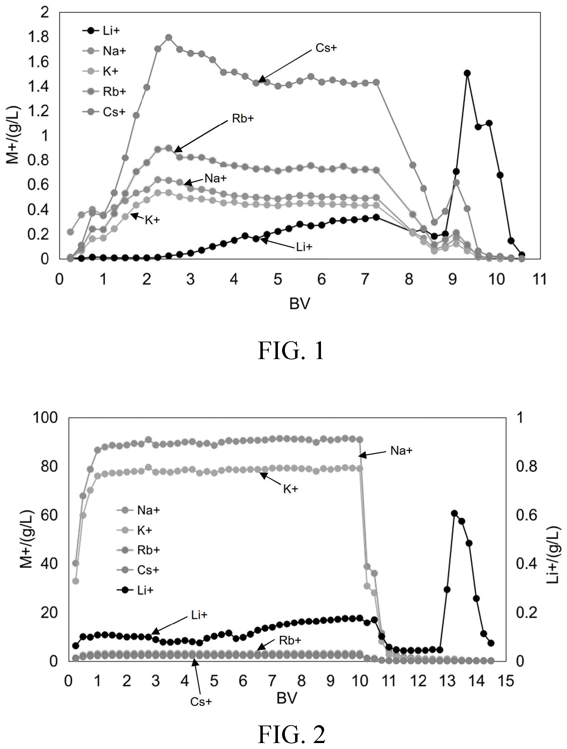

Dynamic lithium extraction performance test of Lithium Extraction Resin 8P3 prepared in Example 11 (low Na/Li, K/Li, Rb/Li, and Cs/Li ratio brine):
1) The experimental raw material brine was a mixed aqueous solution of lithium hydroxide, sodium hydroxide, potassium hydroxide, and cesium hydroxide (wherein Li⁺ = 0.376 g/L, Na⁺ = 0.498 g/L, K⁺ = 0.442 g/L, Rb⁺ = 0.741 g/L, Cs⁺ = 1.477 g/L, and pH = 13). 2) The experimental procedure was as follows: 60 g of wet resin was loaded into an ion exchange column with a diameter of φ = 16 mm and a length of 50 cm, and the experimental raw material brine was passed through the resin column at a flow rate of 1-1.5 mL/min. The effluent was collected in fractions, and the compositions of the effluent fractions were analyzed by ion chromatography (IC). Subsequently, the resin column was washed with water, and then lithium was eluted with 0.1 mol/L hydrochloric acid. The resulting operation curve is shown in FIG. 1, and the system separation factors were α (Li/Na) = 62.89, α (Li/K) = 69.91, α (Li/Rb) = 66.59, and α (Li/Cs) = 42.18.

### EXAMPLE 23

Dynamic lithium extraction performance test of Lithium Extraction Resin 8P3 prepared in Example 11 (with brines having high Na/Li, K/Li, Rb/Li, and Cs/Li ratios):
1) The experimental raw material brine was a real brine containing lithium, sodium, potassium, rubidium, and cesium chlorides (wherein Li⁺ = 0.202 g/L, Na⁺ = 90.350 g/L, K⁺ = 77.858 g/L, Rb⁺ = 2.947 g/L, Cs⁺ = 2.196 g/L, and the OH⁻ concentration is 0.2 mol/L). 2) The experimental procedure was as follows: The resin column from Example 22 was reused. The experimental raw material brine was passed through the resin column at a flow rate of 1-1.5 mL/min. The effluent was collected in fractions, and the compositions of the effluent fractions were analyzed by ion chromatography (IC). Subsequently, the resin column was washed with water, and then lithium was eluted with 0.1 mol/L hydrochloric acid. The resulting operation curve is shown in FIG. 2, and the system separation factors were α (Li/Na) = 733.08, α (Li/K) = 1281.99, α (Li/Rb) > 10000, and α (Li/Cs) > 10000.

### EXAMPLE 24

### Recycling performance of the lithium extraction resin

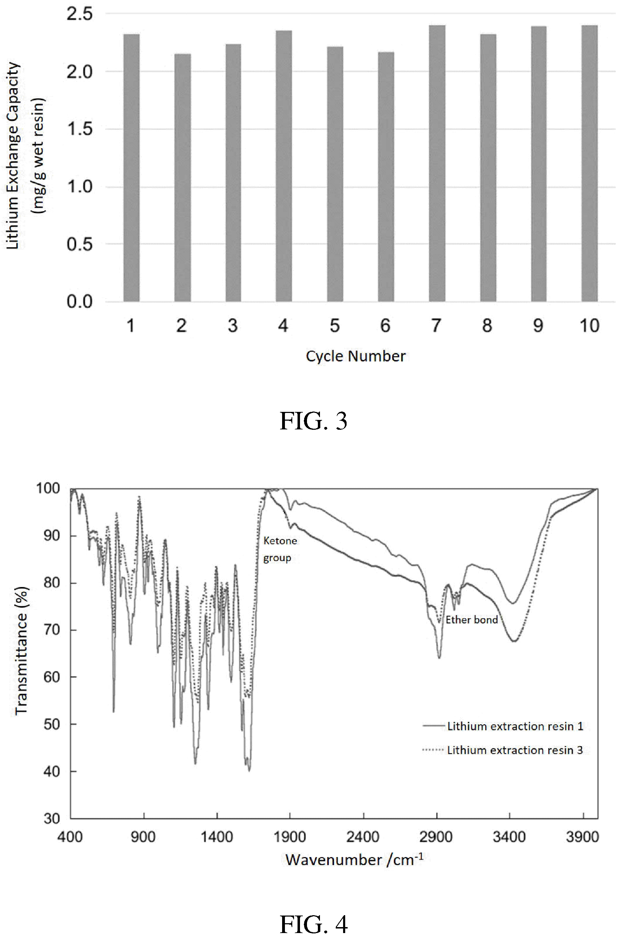

To 5 g of Lithium Extraction Resin 1 was added 20 mL of 0.25 mol/L aqueous lithium hydroxide solution (with a lithium concentration of 1.73 g/L, as measured by ion chromatography). After reaction with shaking for 24 hours, the lithium ion concentration in the residual solution was measured, and the amount of lithium exchanged into the resin was calculated. The Lithium Exchange Capacity = (Liᵢₙᵢₜᵢₐₗ - Li_{residual}) g/L × 20 mL / 5 g. Subsequently, the residual solution was separated, and 20 mL of 0.2 mol/L hydrochloric acid solution was added to elute the lithium and regenerate the resin. After reaction with shaking for 24 hours, the eluent was separated, and the resin was washed with double distilled water until neutral, which was used for the next lithium exchange capacity measurement. The above experimental procedure was repeated 10 times, and the resulting lithium exchange capacity for each cycle is shown in FIG. 3.

### EXAMPLE 25

### Infrared spectrum of the lithium extraction resin

The infrared spectra of Lithium Extraction Resins 1 and 3 are shown in FIG. 4. Both the lithium extraction resins are grafted products of chloromethylated styrene-divinylbenzene spherical copolymers. After grafting, the C-Cl infrared vibration (v = 670 cm⁻¹) characteristic of the chloromethyl group disappeared, while the characteristic infrared absorptions of ether bonds and ketone groups appeared (v = 3020-3050 cm⁻¹; v = 1680-1700 cm⁻¹).

### EXAMPLE 26

Comparison of micrograph between pre-grafting backbone resin and post-grafting lithium extraction resin.

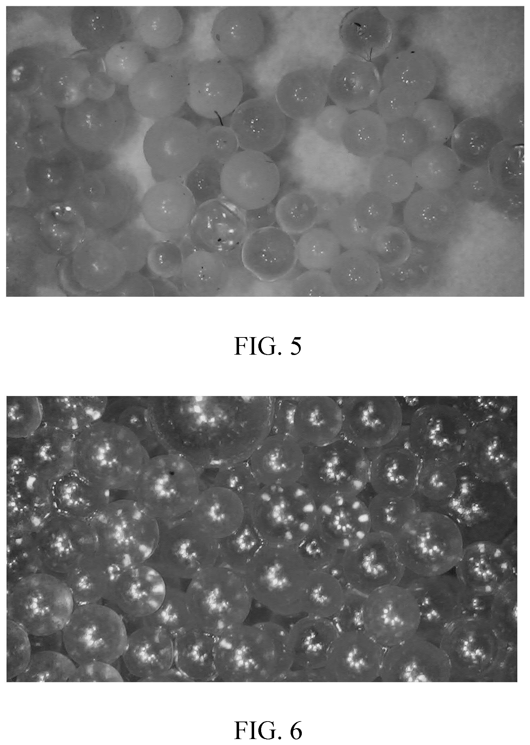

FIG. 5 is a micrograph of the pre-grafting styrene-divinylbenzene copolymer backbone resin beads, and FIG. 6 is a micrograph of the lithium extraction resin beads after grafting of the styrene-divinylbenzene copolymer backbone. Comparing FIG. 5 with FIG. 6, it can be seen that after the grafting, the resin beads became larger and turned yellow.

### EXAMPLE 27

Method of measuring the exchange capacity (for the characterization of the grafting effect)

To 5 g of the lithium extraction resin beads which were cleaned and press-dried with filter paper was added 20 mL of 0.25 mol/L aqueous lithium hydroxide solution (with a lithium concentration of 1.73 g/L), and the mixture was shaken at room temperature for 24 hours. The residual liquid was diluted, and then the lithium content was measured by ion chromatography (IC), thereby calculating the exchange capacity of the resin: The Lithium Exchange Capacity = (Liᵢₙᵢₜᵢₐₗ - Li_{residual}) g/L × 20 mL / 5 g. Furthermore, the lithium-loaded resin beads were separated, washed with double distilled water, and then analyzed by titration with 0.2 mol/L hydrochloric acid (using methyl orange as an indicator) to determine the acid consumption of the lithium-loaded resin beads, thereby calculating the exchange capacity during elution: The Lithium Exchange Capacity = (Hydrochloric acid titration volume L × 0.2 mol/L × 6.94) / 5 g.

The above descriptions are merely exemplary embodiments of the present invention and are not intended to limit the protection scope of the present invention. The protection scope of the present invention is defined by the appended claims.

## Claims

1. A lithium-ion selective resin, comprising at least a 2-hydroxyphenyl ketone-based (or aldehyde-based) functional group having a structure of Formula (I), wherein:
R₁ is hydrogen, optionally substituted C₁-C₄ alkyl or optionally substituted phenyl, wherein the substitution is carried out by a group selected from the group consisting of: C₁-C₄ alkyl, C₁-C₄ alkoxy, halogen, and phenyl; 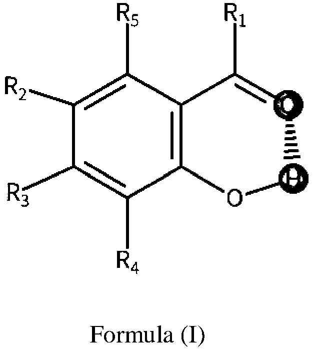
R₂, R₃, R₄ and R₅ are each independently hydrogen, halogen, nitro, benzyloxy, C₁₋₄ alkyl, C₁₋₄ alkoxy, or a linking group, with the proviso that at least one of R₂, R₃, R₄ and R₅ is a linking group that connects the structure of Formula (I) to the polymer backbone via a covalent bond.

2. The lithium-ion selective resin according to claim 1, wherein R₁ in the structure of Formula (I) is hydrogen, methyl, or phenyl.

3. The lithium-ion selective resin according to claim 1 or 2, wherein one of R₂ to R₅ in the structure of Formula (I) is a linking group, and the rest are all H.

4. The lithium-ion selective resin according to claim 1 or 2, wherein one of R₂ to R₅ is nitro.

5. The lithium-ion selective resin according to claim 4, wherein, among R₂ to R₅, other than the nitro and the linking group, the rest are H.

6. The lithium-ion selective resin according to any one of claims 1-5, wherein the linking group among R₂ to R₅ connected to the polymer backbone is an ether bond, thereby grafting the molecular structure containing Formula (I) onto the polymer backbone.

7. The lithium-ion selective resin according to any one of claims 1-6, having a structure of one of Formulae (II) to (V):

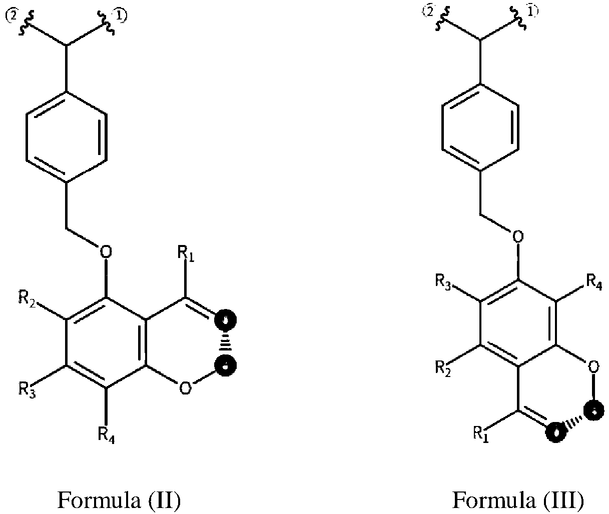

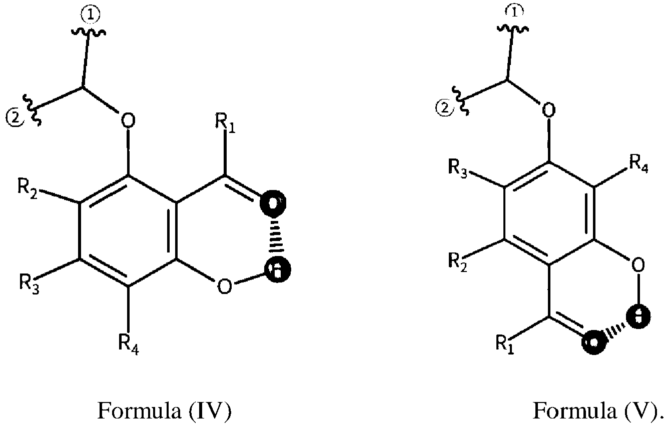

8. The lithium-ion selective resin according to any one of claims 1-7, wherein the R₁ group is hydrogen, methyl, or phenyl, and R₂ to R₄ are all H.

9. The lithium-ion selective resin according to any one of claims 1-7, wherein the R₁ group is hydrogen, methyl, or phenyl; and one of R₂ to R₄ is nitro, with the rest being H.

10. The lithium-ion selective resin according to any one of claims 1-9, wherein the polymer backbone is a polymer capable of undergoing halomethylation or halogenation.

11. The lithium-ion selective resin according to any one of claims 1-10, wherein the polymer backbone is a styrene-divinylbenzene copolymer, polyvinyl chloride, polyphenylene ether, polyetheretherketone, acrylonitrile-styrene copolymer, acrylonitrile-butadiene-styrene copolymer, ethylene-propylene rubber-styreneacrylonitrile copolymer, acrylonitrile-butyl acrylate-styrene copolymer, acrylonitrile-vinyl chloride-styrene copolymer, methyl (meth)acrylate-butadiene-styrene copolymer, or styrene-butylene copolymer.

12. The lithium-ion selective resin according to any one of claims 1-11, wherein the crosslinking degree of the polymer backbone is 0 to 7 wt%.

13. The lithium-ion selective resin according to any one of claims 1-12, wherein the polymer backbone has a gel structure or a macroporous structure.

14. The lithium-ion selective resin according to claim 13, wherein the polymer backbone is spherical.

15. The lithium-ion selective resin according to claim 14, wherein the spherical diameter of the polymer backbone is about 0.1 to 1.5 mm.

16. The lithium-ion selective resin according to any one of claims 1-15, wherein the 2-hydroxyphenyl ketone-based (or aldehyde-based) functional group having a structure of Formula (I) is derived from a lithium-chelating functional monomer selected from the group consisting of: 2,4-dihydroxybenzaldehyde, 2,4-dihydroxyacetophenone, 2,4-dihydroxypropiophenone, 2,4-dihydroxybutyrophenone, 2,4-dihydroxybenzophenone, 2,6-dihydroxybenzaldehyde, 2,6-dihydroxyacetophenone, 2,6-dihydroxypropiophenone, 2,6-dihydroxybutyrophenone, 2,6-dihydroxybenzophenone, 2,4-dihydroxy-5-nitro-benzaldehyde, 2,4-dihydroxy-5-nitro-acetophenone, 2,4-dihydroxy-5-nitro-propiophenone, 2,4-dihydroxy-5-nitro-butyrophenone, 2,4-dihydroxy-5-nitro-benzophenone, 2,4-dihydroxy-3-nitrobenzaldehyde, 2,4-dihydroxy-3-nitro-acetophenone, 2,4-dihydroxy-3-nitropropiophenone, 2,4-dihydroxy-3-nitro-butyrophenone, 2,4-dihydroxy-3-nitro-benzophenone, 2,6-dihydroxy-3-nitro-benzaldehyde, 2,6-dihydroxy-3-nitroacetophenone, 2,6-dihydroxy-3-nitro-propiophenone, 2,6-dihydroxy-3-nitro-butyrophenone, 2,6-dihydroxy-3-nitro-benzophenone, 2,6-dihydroxy-5-nitrobenzaldehyde, 2,6-dihydroxy-5-nitro-acetophenone, 2,6-dihydroxy-5-nitropropiophenone, 2,6-dihydroxy-5-nitro-butyrophenone, 2,6-dihydroxy-5-nitro-benzophenone, any mixtures of the aforementioned, or halogenated derivatives thereof.

17. The lithium-ion selective resin according to claim 16, wherein the grafting amount of the lithium-chelating functional monomer is about 0.01-5 mmol/g resin.

18. The lithium-ion selective resin according to any one of claims 1-17, further comprising a hydrophilicity-improving modifying group.

19. The lithium-ion selective resin according to claim 18, wherein the hydrophilicity-improving modifying group comprises one or more of: a sulfonic acid group, a carboxylic acid group, a phosphoric acid group, a phenolic hydroxyl group, an alcoholic hydroxyl group, an iminodiacetic acid group, a primary amine group, a secondary amine group, and a quaternary ammonium group.

20. The lithium-ion selective resin according to claim 18 or 19, wherein the hydrophilicity-improving modifying group is derived from benzenesulfonic acid, benzoic acid, benzyl alcohol, acrylic acid, phosphoramidic acid, iminodiacetic acid, phenol, allyl alcohol, trimethylamine quaternary ammonium salt, triethylamine quaternary ammonium salt, triethanolamine quaternary ammonium salt, or tri-isopropanolamine quaternary ammonium salt.

21. The lithium-ion selective resin according to any one of claims 18-20, wherein the grafting amount of the hydrophilicity-improving modifying group is about 0-3 mmol/g resin.

22. The lithium-ion selective resin according to any one of claims 1-21, wherein the lithium-ion selective resin further contains a cation exchange group or an anion exchange group.

23. The lithium-ion selective resin according to any one of claims 1-22, further comprising a covalently bonded neutral chelating functional group.

24. The lithium-ion selective resin according to claim 23, wherein the neutral chelating functional group is a ketone, ester, phosphine oxide, or crown ether.

25. The lithium-ion selective resin according to claim 23 or 24, wherein the neutral chelating functional group is derived from ethyl benzoate, (2-hydroxybenzyl)diphenylphosphine oxide, (2,5-dihydroxyphenyl)diphenylphosphine oxide, benzo-12-crown-4, and/or dibenzo-14-crown-4.

26. The lithium-ion selective resin according to any one of claims 23-25, wherein the grafting amount of the neutral chelating functional group is about 0-3 mmol/g resin.

27. The lithium-ion selective resin according to any one of claims 1-26, wherein the lithium saturated exchange capacity of the lithium-ion selective resin is about 0.05 to 1 mmol/g resin.

28. A method of extracting lithium, comprising:
contacting the lithium-ion selective resin according to any one of claims 1-27 with a lithium-containing solution, and then separating the lithium-ion selective resin.

29. The method according to claim 28, further comprising:
a step of regenerating the resin after contacting the lithium-ion selective resin with the lithium-containing solution.

30. A method of preparing a lithium-ion selective resin via a grafting reaction, comprising: using a halogenated polymer matrix and a lithium-chelating functional monomer as raw materials, employing an etherification grafting reaction to covalently bond the lithium-chelating functional monomer to the polymer matrix, thereby forming lithium-ion selective resin beads or particles.

31. The method according to claim 30, wherein the etherification grafting reaction is: using at least one of acetone, acetonitrile, tetrahydrofuran, N,N-dimethylformamide, N,N-dimethylacetamide as a solvent, using at least one of lithium carbonate, sodium carbonate, potassium carbonate, rubidium carbonate, cesium carbonate as a base, the molar ratio of the lithium-chelating functional monomer to the halogen in the polymer matrix is about 0.2 to 1.2, the molar ratio of the base to the lithium-chelating functional monomer is about 0.2 to 1.2, the amount of solvent is about 2 to 20 times the mass of the polymer matrix, the grafting reaction temperature is about 40 to 120°C, and the reaction time is about 2 to 72 h.

32. The method according to claim 30 or 31, wherein the polymer matrix is a spherical chloromethylated styrene-divinylbenzene copolymer.

33. The method according to claim 32, wherein the spherical chloromethylated styrene-divinylbenzene copolymer further contains sulfonic acid group, phosphonic acid group, or carboxylic acid group.

34. The method according to claim 32 or 33, wherein the chlorine content of the spherical chloromethylated styrene-divinylbenzene copolymer is about 5-30 wt%.

35. The method according to any one of claims 32-34, wherein the crosslinking degree of the spherical chloromethylated styrene-divinylbenzene copolymer is about 0 to 5%.

36. The method according to any one of claims 32-35, wherein the spherical chloromethylated styrene-divinylbenzene copolymer is prepared by chloromethylation of styrene-divinylbenzene copolymer unfunctionalized beads.

37. The method according to any one of claims 30-36, wherein tetrabutylammonium chloride, tetrabutylammonium bromide, or tetrabutylammonium iodide is added to the etherification grafting reaction as a phase transfer catalyst.

38. The method according to any one of claims 30-37, wherein potassium iodide is added to the etherification grafting reaction as a catalyst.

39. A method of preparing a lithium-ion selective resin via a copolymerization, comprising: using a 4-vinylbenzyl ether-bonded lithium-chelating functional monomer as a raw material, copolymerizing it with 4-vinylstyrene and optional divinylbenzene to prepare lithium-ion selective resin beads or particles.

40. The method according to claim 39, wherein the preparation of the lithium-ion selective resin beads or particles adopts a suspension polymerization method.

41. The method according to claim 40, wherein the suspension polymerization method comprises mixing the 4-vinylbenzyl ether-bonded lithium-chelating functional monomer with liquid styrene, optional divinylbenzene, and an initiator, then under a heating condition, adding the above mixture dropwise to an aqueous solution containing a salt and a reinforcing dispersing aid, and reacting under vigorous stirring to obtain lithium-ion selective resin beads or particles.

42. The method according to any one of claims 39-41, wherein the molar ratio of styrene to the 4-vinylbenzyl ether-bonded lithium-chelating functional monomer is about 0.2-3.

43. The method according to claim 42, wherein divinylbenzene is about 0 to 7% by weight of the total weight of styrene plus the vinylbenzyl ether-bonded lithium-chelating functional monomer .

44. The method according to claim 41, wherein the salt used is sodium chloride.

45. The method according to claim 41, wherein the reinforcing dispersing aid used is polyvinyl alcohol.

46. The method according to any one of claims 39-45, further comprising adding 4-vinylbenzenesulfonic acid (sodium salt), (4-vinylbenzyl)trimethylammonium chloride, or 4-vinylbenzyl alcohol to copolymerize with the vinylbenzyl ether-bonded lithium-chelating functional monomer , styrene, and divinylbenzene.

47. The method according to claim 46, wherein the amount of 4-vinylbenzenesulfonic acid (sodium salt), (4-vinylbenzyl)trimethylammonium chloride, or 4-vinylbenzyl alcohol added is about 0-3 mmol/g resin.
